# EUROPEAN PATENT APPLICATION

(11) **EP 3 958 607 A1**
(43) Date of publication of application: **23.02.2022**
(21) Application number: 19925333.7
(22) Date of filing: 19.04.2019
(51) Int. Cl.: H04W 24/10, H04W 16/28

(54) **USER TERMINAL AND WIRELESS COMMUNICATION METHOD**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/016862
(87) International publication number: WO 2020/213163

(57) **Abstract**

A user terminal according to an aspect of the present disclosure includes: a receiving section that receives first configuration information including a parameter of report quantity of channel state information indicating report of a signal to interference plus noise ratio (SINR); and a control section that performs, in a case of receiving second configuration information including a parameter of the report quantity of the channel state information indicating report of reference signal received power (RSRP), control of reporting a given number of the SINRs in descending order of a value of a corresponding RSRP. According to an aspect of the present disclosure, appropriate beam report can be performed.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, a method of beam management (BM) has been under study. In the beam management, performing beam selection based on reference signal received power in a physical layer (layer 1) (Layer 1 Reference Signal Received Power (L1-RSRP)) reported by a UE has been under study.

In NR of Rel-16 or later versions, use of beam measurement results other than the L1-RSRP (interference measurement or the like) has also been under study. However, a specific method of reporting to the UE for such new beam selection/reporting or the like has not yet been fully studied. If such selection/reporting cannot be carried out, beam selection cannot be appropriately carried out, and reduction of communication throughput or the like may pose a problem.

In the light of this, the present disclosure has one object to provide a user terminal and a radio communication method that enable appropriate beam report.

### Solution to Problem

A user terminal according to an aspect of the present disclosure includes: a receiving section that receives first configuration information including a parameter of report quantity of channel state information indicating report of a signal to interference plus noise ratio (SINR); and a control section that performs, in a case of receiving second configuration information including a parameter of the report quantity of the channel state information indicating report of reference signal received power (RSRP), control of reporting a given number of the SINRs in descending order of a value of a corresponding RSRP.

### Advantageous Effects of Invention

According to an aspect of the present disclosure, appropriate beam report can be performed.

### Brief Description of Drawings

FIG. 1 is an extract of an RRC information element "CSI-ReportConfig";
FIGS. 2A and 2B are each a diagram to show an example of an RRC parameter indicating indicator information;
FIGS. 3A and 3B are each a diagram to show another example of the RRC parameter indicating the indicator information;
FIG. 4 is a diagram to show an example of report quantity for causing reporting of SINR;
FIG. 5 is a diagram to show another example of the report quantity for causing reporting of the SINR;
FIG. 6 is a diagram to show an example of resources for CSI measurement and resources for CSI report;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

### (CSI)

In NR, the UE measures a channel state by using a given reference signal (or resources for the reference signal), and feeds back (reports) channel state information (CSI) to a base station.

The UE may measure the channel state by using a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), or the like.

A CSI-RS resource may include at least one of a non zero power (NZP) CSI-RS and CSI-Interference Management (CSI-IM). The SS/PBCH block is a block including a synchronization signal (for example, a primary synchronization signal (PSS) or a secondary synchronization signal (SSS)) and a PBCH (and its corresponding DMRS), and may be referred to as an SS block (SSB) or the like.

Note that the CSI may include at least one of a channel quality indicator (CQI), a precoding matrix indicator (PMI), a CSI-RS resource indicator (CRI), an SS/PBCH block resource indicator (SSBRI (SS/PBCH Block Indicator)), a layer indicator (LI), a rank indicator (RI), L1-RSRP (reference signal received power in layer 1 (Layer 1 Reference Signal Received Power)), L1-RSRQ (Reference Signal Received Quality), L1-SINR (Signal to Interference plus Noise Ratio), L1-SNR (Signal to Noise Ratio), and the like.

The CSI may include a plurality of parts. The first part of the CSI (CSI part 1) may include information (for example, the RI) having relatively a small number of bits. The second part of the CSI (CSI part 2) may include information (for example, the CQI) having relatively a large number of bits, such as information determined based on CSI part 1.

As a feedback method of the CSI, (1) a periodic CSI (P-CSI) report, (2) an aperiodic CSI (A-CSI) report, (3) a semi-persistent CSI report (SP-CSI (Semi-Persistent CSI)) report, and the like have been under study.

The UE may receive reporting of the information (which may be referred to as CSI report configuration information) related to the CSI report by using higher layer signaling, physical layer signaling (for example, downlink control information (DCI)), or a combination of these. The CSI report configuration information may be, for example, configured using an RRC information element "CSI-ReportConfig".

Note that, in the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The CSI report configuration information may include, for example, information related to a report periodicity, an offset, or the like, these may be expressed in the unit of given time (the unit of a slot, the unit of a subframe, the unit of a symbol, or the like). The CSI report configuration information may include a configuration ID (CSI-ReportConfigId), and with the configuration ID, parameters such as a type of a CSI report method (whether or not the SP-CSI is used or the like) and a report period may be identified. The CSI report configuration information may include information (CSI-ResourceConfigId) indicating which CSI measured by using which signal (or resources for which signal) is to be reported.

### (Beam Management)

In Rel.15 NR, a method of beam management (BM) has hitherto been under study. In the beam management, performing beam selection based on L1-RSRP reported by the UE has been under study. To change (switch) beams of a given signal/channel may correspond to changing of the Transmission Configuration Indication state (TCI state) of the signal/channel.

Note that the beam selected through beam selection may be a transmit beam (Tx beam), or may be a receive beam (Rx beam). Further, the beam selected through beam selection may be a beam of the UE, or may be a beam of the base station.

The UE may report (transmit) measurement results for beam management by using a PUCCH or a PUSCH. The measurement results may be, for example, the CSI including at least one of L1-RSRP, L1-RSRQ, L1-SINR, L1-SNR, and the like. Further, the measurement results may be referred to as a beam measurement, a beam measurement report, beam measurement results, a beam report, beam report CSI, or the like.

The CSI measurement for the beam report may include interference measurement. The UE may measure channel quality, interference, or the like by using resources for CSI measurement, and derive the beam report. The resources for CSI measurement may be, for example, at least one of resources of the SS/PBCH block, resources of the CSI-RS, other reference signal resources, and the like. Configuration information of the CSI measurement report may be configured for the UE by using higher layer signaling.

Note that, in the present disclosure, the resources for interference measurement may be interpreted as at least one of IMRs (Interference Measurement Resources), CSI-IM (Interference Measurement) resources, zero power (ZP) CSI-RS resources, non-zero power (NZP) CSI-RS resources, SS/PBCH block resources, and the like.

In the beam report, results of at least one of channel quality measurement and interference measurement may be included. The results of channel quality measurement may include, for example, L1-RSRP. The results of interference measurement may include L1-SINR, L1-SNR, L1-RSRQ, other indices related to interference (for example, any index other than L1-RSRP), and the like.

Note that the resources for CSI measurement for beam management may be referred to as resources for beam measurement. Further, a signal/channel as a target of the CSI measurement may be referred to as a signal for beam measurement. Further, the CSI measurement/report may be interpreted as at least one of measurement/report for beam management, beam measurement/report, radio link quality measurement/report, and the like.

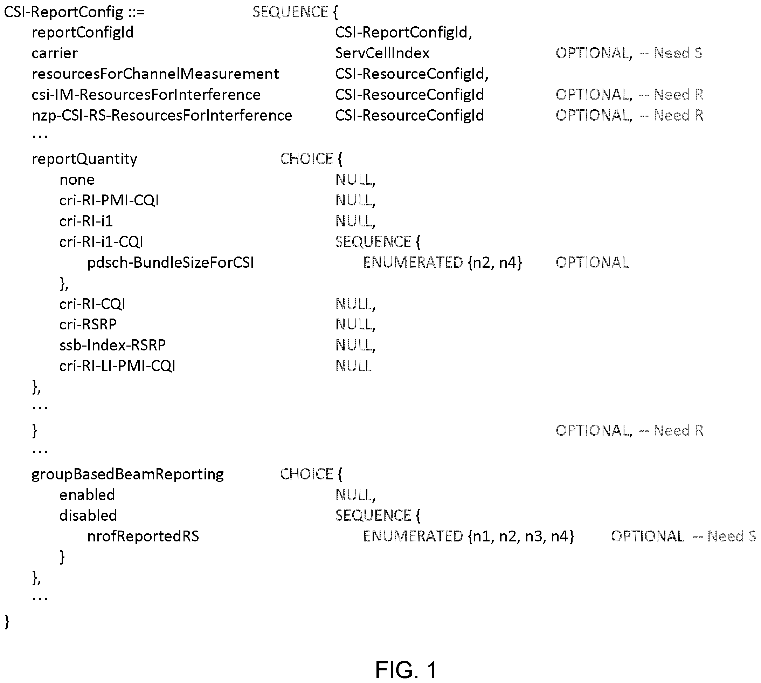

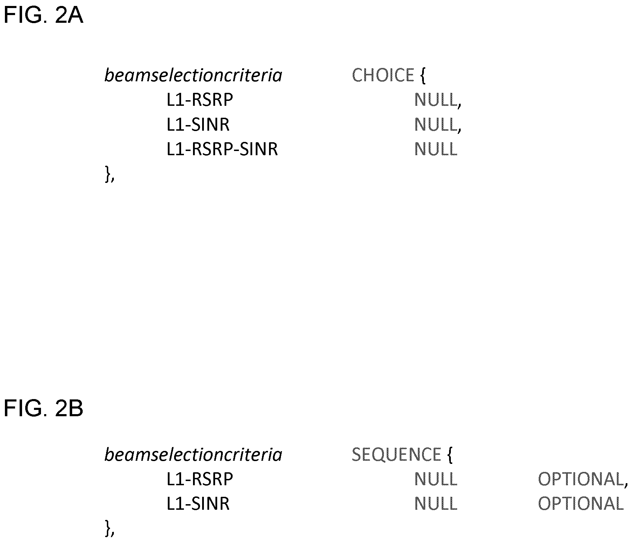

The CSI report configuration information in consideration of beam management according to NR at present will be described with reference to FIG. 1. FIG. 1 is an extract of an RRC information element "CSI-ReportConfig". FIG. 1 is described using the notation of ASN.1 (Abstract Syntax Notation One) (the same applied to FIGS. 2A to 5 to be described later).

The CSI report configuration information (CSI-ReportConfig) may include RRC parameters "resourcesForChannelMeasurement", "csi-IM-ResourcesForInterference", "nzp-CSI-RS-ResourcesForInterference", and the like indicating Identifiers (IDs) of CSI resource configurations to be measured.

"resourcesForChannelMeasurement" may indicate CSI-RS resources used for channel measurement, "csi-IM-ResourcesForInterference" may indicate CSI-IM resources for interference measurement, and "nzp-CSI-RS-ResourcesForInterference" may indicate NZP CSI-RS resources for interference measurement.

The CSI report configuration information may include "report quantity" (which may be represented as an RRC parameter "reportQuantity") being information of a parameter reported with one report instance (for example, one piece of CSI). The report quantity is defined as a type of an ASN.1 object referred to as a "choice type (choice)". Thus, one of parameters (cri-RSRP, ssb-Index-RSRP, and the like) defined as the report quantity is configured.

The UE configured with a higher layer parameter (for example, an RRC parameter "groupBasedBeamReporting") included in the CSI report configuration information being enabled may include a plurality of resource IDs for beam measurement (for example, the SSBRI, the CRI) and a plurality of measurement results (for example, the L1-RSRP) corresponding to these in the beam report regarding each report configuration.

The UE configured with the number of report target RS resources, the number being one or more, using a higher layer parameter (for example, an RRC parameter "nrofReportedRS") included in the CSI report configuration information may include one or more resource IDs for beam measurement and one or more measurement results (for example, the L1-RSRP) corresponding to these in the beam report regarding each report configuration.

Incidentally, in Rel-15 NR, out of the report quantity, cri-RSRP and ssb-Index-RSRP are related to beam management. The UE configured with cri-RSRP reports the CRI and L1-RSRP corresponding to the CRI. The UE configured with ssb-Index-RSRP reports the SSBRI and L1-RSRP corresponding to the CRI.

However, in Rel-15 NR that has hitherto been studied, beam selection can be performed based only on the L1-RSRP. Further, the configuration of including an interference report (a report such as the L1-SINR) in the beam report cannot be performed. When the beam selection and the report are related only to the L1-RSRP, beam selection may not be able to be appropriately carried out, and reduction of communication throughput or the like may pose a problem.

In the light of this, the inventors of the present invention came up with the idea of CSI report configuration for appropriate beam report.

Embodiments according to the present disclosure will be described below in detail with reference to the drawings. The radio communication methods according to respective embodiments may each be employed individually, or may be employed in combination.

In the present disclosure, interference, SINR, SNR, RSRQ, interference power, and the like may be interchangeably interpreted as each other.

### (Radio Communication Method)

### <First Embodiment>

A first embodiment relates to a configuration of beam selection.

Information related to criteria (indicator) of beam selection may be configured for the UE by using higher layer signaling. The information may be hereinafter referred to as indicator information.

The indicator information may be defined with a new RRC parameter (or RRC information element). The indicator information may be, for example, defined with an RRC parameter "beamselectioncriteria (or beamSelectionCriteria)". The indicator information may be reported to the UE by being included in the CSI report configuration information (CSI-ReportConfig), or may be reported separately from the CSI report configuration information.

Based on the indicator information, the UE may perform beam selection based only on the L1-RSRP, may perform beam selection based only on the L1-SINR, or may perform beam selection based on both of the L1-RSRP and the L1-SINR.

FIGS. 2A and 2B are each a diagram to show an example of the RRC parameter indicating the indicator information. The UE may use any one of the following as the indicator of beam selection, for example, based on the value of the indicator information of FIGS. 2A and 2B:
- L1-RSRP,
- L1-SINR, and
- L1-RSRP and L1-SINR.

FIG. 2A is an example of definition when CHOICE of the ASN.1 notation is used. In a case of CHOICE, only any one of enumerated values can be selected, and thus when a plurality of indicators are specified, such a field needs to be included. For example, when the L1-RSRP and the L1-SINR are indicated, "L1-RSRP-SINR" is selected.

FIG. 2B is an example of definition when SEQUENCE of the ASN.1 notation is used. In a case of SEQUENCE, one or a plurality of enumerated values can be selected (meaning "OPTIONAL" is not necessarily required), and thus it is only necessary that a plurality of individual fields be included even when a plurality of indicators are specified. For example, when the L1-RSRP and the L1-SINR are indicated, "L1-RSRP" and "L1-SINR" are selected.

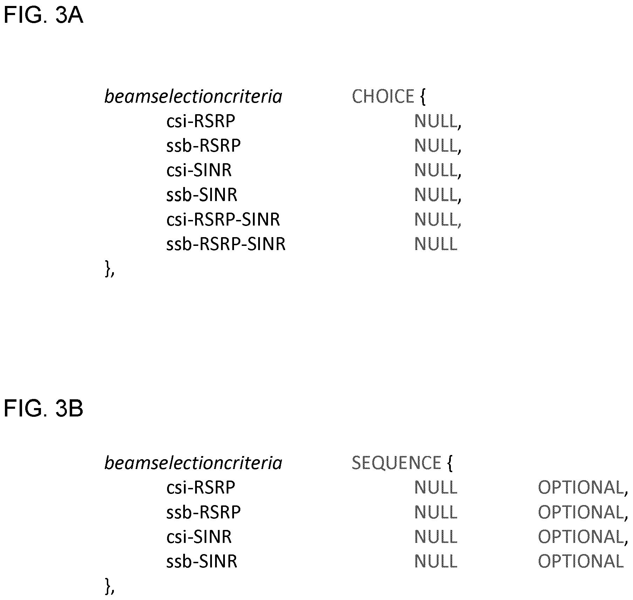

FIGS. 3A and 3B are each a diagram to show another example of the RRC parameter indicating the indicator information. The UE may use any one of the following as the indicator of beam selection, for example, based on the value of the indicator information of FIGS. 3A and 3B:
- csi-RSRP,
- ssb-RSRP,
- csi-SINR,
- ssb-SINR,
- csi-RSRP and csi-SINR, and
- ssb-RSRP and ssb-SINR.

FIGS. 3A and 3B correspond to figures in which the indicators of FIGS. 2A and 2B are expressed with specific measurement details, respectively. This is because of the following reason: As the L1-RSRP/SINR, in actuality, csi-RSRP/SINR being a measurement value based on the CSI-RS or ssb-RSRP/SINR being a measurement value based on the SSB (for example, the SSS and/or the DMRS in the SSB) is used.

Note that, even when the CSI report configuration information includes the indicator information, the report quantity included by the CSI report configuration information may indicate measurement results different from the indicator indicated by the indicator information.

Further, when the CSI report configuration information does not include the indicator information or the indicator information is not defined, the UE may determine the criteria (indicator) of beam selection, based on the report quantity ("reportQuantity") included in the CSI report configuration information.

For example, when the report quantity configured for the UE indicates a report of csi-SINR, the UE may perform beam selection based on the L1-SINR (csi-SINR), and report csi-SINR regarding the selected beam. Candidates of the value of the report quantity will be described later in a second embodiment.

According to the first embodiment described in the above, the UE can appropriately determine criteria of beam selection, and can perform beam selection.

### <Second Embodiment>

The second embodiment relates to a configuration of the report quantity for causing reporting of the SINR.

The report quantity may be a report quantity obtained by enhancing the existing RRC parameter "reportQuantity", or may be represented as a new RRC parameter. The new RRC parameter may be reported to the UE by being included in the CSI report configuration information (CSI-ReportConfig).

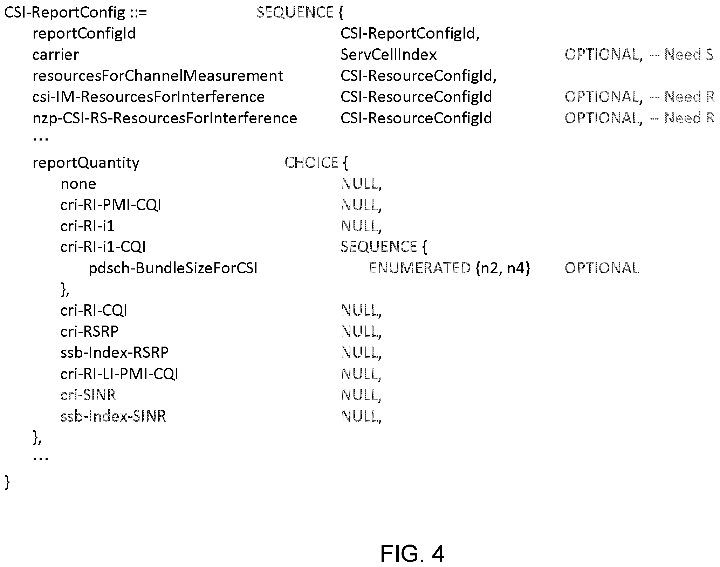

FIG. 4 is a diagram to show an example of the report quantity for causing reporting of the SINR. The parameter of the report quantity included in the CSI report configuration information is a parameter obtained by enhancing the existing RRC parameter "reportQuantity".

With the use of the report quantity, for example, any one of the following can be specified as a report target:
- csi-SINR (in the case where "cri-SINR" configuration is configured), and
- ssb-SINR (in the case whee "ssb-Index-SINR" configuration is configured).

For example, when "cri-SINR" is configured as the report quantity, the UE may report csi-SINR and the CRI corresponding to the csi-SINR.

Note that the UE may include, in the report including measurement results starting with "csi-", the CRI corresponding to the measurement results. Note that the UE may include, in the report including measurement results starting with "ssb-", the SSBRI corresponding to the measurement results.

Further, in the present disclosure, a term starting with "cri-" such as "cri-SINR" may be interpreted as a term starting with "csi-" such as "csi-SINR".

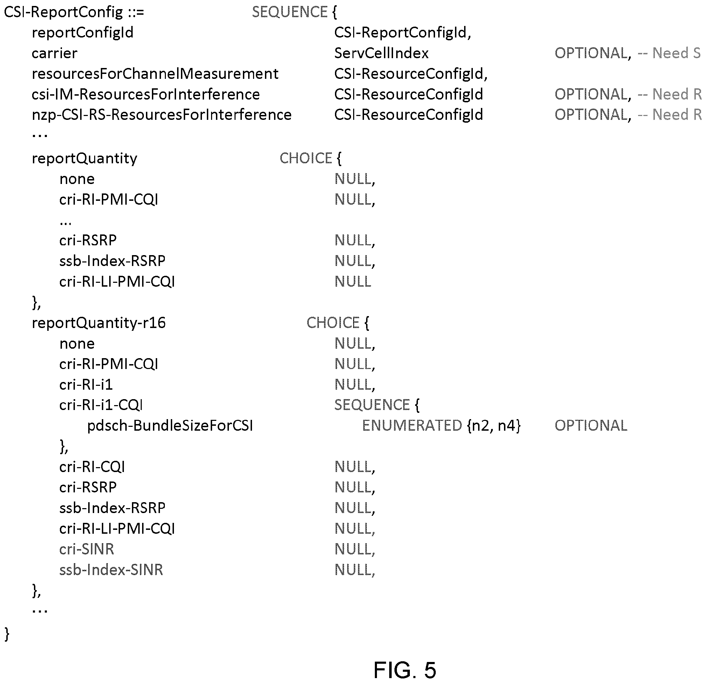

FIG. 5 is a diagram to show another example of the report quantity for causing reporting of the SINR. The parameter of the report quantity included in the CSI report configuration information is configured with a new RRC parameter "reportQuantity-r16". Report target(s) that can be specified may be similar to those described with reference to FIG. 4.

The parameter may be, for example, reported to the UE conforming to Rel-16 NR. When the UE is configured with "reportQuantity-r16", the UE may ignore "reportQuantity". To an Rel-15 UE, the existing RRC parameter "reportQuantity" may be reported. The Rel-15 UE may ignore configuration of "reportQuantity-r16". With this configuration, backward compatibility of the specifications can be secured.

When the UE is configured with the report quantity with at least one of csi-SINR and ssb-SINR being a report target, the UE may perform at least one of the following assumptions:
- Perform low latency beam selection (or measurement or report),
- Perform low overhead beam selection (or measurement or report),
- Perform beam failure recovery in a secondary cell,
- Use interference measurement results (for example, the SINR) for beam failure recovery,
- Use interference measurement results (for example, the SINR) for beam selection, and
- Include interference measurement results (for example, the SINR) in the beam report.

Note that low latency beam selection may be referred to as fast beam selection, beam selection without the TCI state (beam selection w/o TCI state), beam selection type II, TCI state indication type 2, or the like.

Further, low overhead beam selection may be, for example, a method of skipping reporting of the beam report under a given condition.

Note that the UE may transmit, to the base station, UE capability information related to whether or not the SINR can be reported. The base station may configure the report quantity described in the second embodiment for the UE having the UE capability information.

Further, the UE configured with more than one report target RS resources using a higher layer parameter (for example, the RRC parameter "nrofReportedRS") included in the CSI report configuration information may report the L1-RSRP or the L1-SINR corresponding to a certain RS in the form of a difference from the maximum L1-RSRP or L1-SINR.

According to the second embodiment described in the above, the UE can appropriately determine the beam report target.

### <Third Embodiment>

The third embodiment relates to a configuration of the report of the L1-RSRP and the L1-SINR.

When the UE is configured with the SS/PBCH blocks or the CSI-RS resources for L1-RSRP measurement (or calculation) by using higher layer signaling, the UE may measure the L1-RSRP by using the resources, and report the L1-RSRP for beam management.

Further, the UE may be configured with performing measurement for the L1-SINR. For example, when a parameter (reportQuantity) related to reported quality included in received CSI report configuration information (CSI-ReportConfig information element of RRC signaling) indicates measurement for the L1-SINR, the UE may determine that the UE is configured with performing measurement for the L1-SINR. Note that, in the following description, in the present disclosure, reportQuantity may mean reportQuantity as shown in FIG. 4, or may mean reportQuantity-r16 as shown in FIG. 5.

When the UE is configured with L1-SINR measurement, the UE may perform L1-SINR measurement, and transmit the L1-SINR to the base station. The base station may determine at least one beam, based on the report (the L1-RSRP and the L1-SINR) from the UE.

For example, when the UE is configured with resources for the first measurement (the SS/PBCH blocks or the CSI-RS resources) for L1-RSRP measurement (or calculation) and resources for the second measurement (the SS/PBCH blocks or the CSI-RS resources) for L1-SINR measurement (or calculation) using higher layer signaling, the UE may measure the L1-RSRP by using the resources for the first measurement and measure the L1-SINR by using the resources for the second measurement, and may report the L1-RSRP and the L1-SINR for beam management.

When the UE is configured with resources for a first number of L1-RSRP measurements by higher layer, the UE may measure the resources for the first number of L1-RSRP measurements. The UE may report a second number of L1-RSRPs satisfying a given condition (for example, having a larger value) out of the measurement results (L1-RSRPs) corresponding to the resources for the first number of L1-RSRP measurements. For example, the first number may be 64, and the second number may be 4.

Configuration information (which may include, for example, information of an ID, a resource position for measurement (periodicity or the like)) for the first number of L1-RSRP measurements, information related to the second number, or the like may be configured for (reported to) the UE by using higher layer signaling, physical layer signaling, or a combination of these.

When the UE is configured with resources for a third number of L1-SINR measurements by higher layer, the UE may measure the resources for the third number of L1-SINR measurements. The UE may report a fourth number of measurement results satisfying a given condition (for example, having a smaller value) out of the measurement results (L1-SINRs) corresponding to the resources for the third number of L1-SINR measurements. For example, the third number may be 64, and the fourth number may be 4.

Configuration information (which may include, for example, information of an ID, a resource position for measurement (periodicity or the like)) for the third number of L1-SINR measurements, information related to the fourth number, or the like may be configured for (reported to) the UE by using higher layer signaling, physical layer signaling, or a combination of these.

Note that the first number and the third number may be either the same or different. The second number and the fourth number may be either the same or different.

Note that, if the UE is not configured with the resources for L1-SINR measurement despite being configured with L1-SINR measurement, the UE may measure default resources for L1-SINR measurement to perform L1-SINR measurement. The default resources may be configured for the UE by using higher layer signaling separately, or may be determined in a specification.

When the UE is configured with a fourth number (represented by X for the sake of simplicity) of L1-SINR reports described above, the UE may determine a set of values of the reported L1-SINRs according to at least one of the following (1) to (4):
(1) X L1-SINRs are reported in descending order of values of the L1-SINRs,
(2) X L1-SINRs are reported in descending order of values of corresponding L1-RSRPs,
(3) If at least one higher layer parameter (for example, "reportQuantity") configured with the L1-RSRP being report quantity is configured, X L1-SINRs are reported in descending order of values of corresponding L1-RSRPs, and
(4) If no higher layer parameter (for example, "reportQuantity") configured with the L1-RSRP being report quantity is configured, X L1-SINRs are reported in descending order of values of the L1-SINRs.

Regarding (2) and (3) above, the UE may determine that the L1-RSRP and the L1-SINR correspond to each other (are associated with each other), when at least one of the following conditions is satisfied:
- A CSI resource configuration ID (for example, at least one of "resourcesForChannelMeasurement", "csi-IM-ResourcesForInterference", and "nzp-CSI-RS-ResourcesForInterference") of a measurement target included in CSI report configuration information (CSI-ReportConfig) included in "reportQuantity" indicating the L1-RSRP measurement is the same as a CSI resource configuration ID (for example, at least one of "resourcesForChannelMeasurement", "csi-IM-ResourcesForInterference", and "nzp-CSI-RS-ResourcesForInterference") of a measurement target included in other CSI report configuration information (CSI-ReportConfig) including "reportQuantity" indicating the L1-SINR measurement.
- The resources (for example, the SSB, the CSI-RS, or the like) for measurement for the L1-RSRP are the same as or quasi-co-located (Quasi-Co-Location (QCL)) with the resources (for example, the SSB, the CSI-RS, or the like) for measurement for the L1-SINR.

(2) and (3) above are, simply put, control of selecting a more preferable L1-SINR (corresponding to a high L1-RSRP) as the report target instead of selecting the report target from all of the L1-SINRs, and are therefore more preferable for determination of beam selection.

Note that, in the case of (3) above, when the UE drops (in other words, does not transmit, or skips) at least one of the L1-RSRP and the L1-SINR, the UE may determine a set of values of the reported L1-SINRs according to (1) above, or may determine a set of values of the reported L1-SINRs according to (2) above. Whether (1) or (2) is used may be determined based on which of the L1-RSRP or the L1-SINR is dropped, or may be determined based on at least one of the dropped or transmitted L1-RSRP and L1-SINR.

### [Expression Method of Value of L1-SINR]

An expression method of the value of the L1-SINR included in the CSI report will be described.

The L1-SINR may be expressed with a given number of bits (for example, m bits), and using the bits, a given range (for example, a range of [-140, -44] dBm, or a range of [-30, +20] dBm) may be configured to be able to be expressed with a given step size (for example, 1 dB step size).

When a plurality of L1-SINRs are included in the CSI report, for example, the L1-SINR corresponding to the smallest or largest measurement value may be expressed with the given number of bits (for example, m bits), and other L1-SINRs may be expressed as a difference from the smallest or largest measurement value with bits (for example, n bits) less than the given number.

A range corresponding to an absolute value of the measurement value of m bits, a range corresponding to a relative value (difference) of the measurement value of n bits, the values of m and n, or the like may be configured for the UE by using higher layer signaling, or may be determined in a specification. For example, m may be 7, m may be 4, and the like.

The order of the L1-SINRs included in the CSI report may be descending order or ascending order of values of corresponding L1-RSRPs, may be descending order or ascending order of values of the L1-SINR, or may be descending order or ascending order of indices for configured measurement or report (for example, configuration IDs for report (CSI-ReportConfigId), or configuration IDs for measurement (CSI-ResourceConfigId)).

Note that, in the present disclosure, an index, an ID, an indicator, a resource ID, and the like may be interchangeably interpreted.

It is preferable that the order of the L1-SINRs included in the CSI report be descending order or ascending order of values of the L1-SINRs when, for example, a set of the values of the L1-SINRs determined according to (1), (4), or the like described above is reported. In this case, for example, regarding the L1-SINRs included in the CSI report, the i-th (i is an integer) L1-SINR in the order corresponds to the i-th largest value (in other words, the L1-SINRs monotonically decrease or monotonically increase in the order), and thus the range of the difference value of n bits described above may be, for example, configured or defined to be a range of 0 or less (or a range of 0 or greater).

It is preferable that the order of the L1-SINRs included in the CSI report be descending order or ascending order of values of corresponding L1-RSRPs when, for example, a set of the values of the L1-SINRs determined according to (2), (3), or the like described above is reported. In this case, for example, the (i+1)-th L1-SINR in order included in the CSI report may be either larger or smaller than the i-th L1-SINR, and thus the range of the difference value of n bits described above may be, for example, configured or defined to be a range including both of positive and negative values.

Thus, even when the UE generates the same difference value of n bits as the value of the L1-SINR, the UE may use a first table in which the range of the value is limited to any one of 0 or less and 0 or greater and a second table in which the range of the value includes both of positive and negative values appropriately for different purposes.

For example, when a set of values of the L1-SINRs determined according to (1), (4), or the like described above is reported, a bit value of the L1-SINRs may be determined with reference to the first table, and when a set of values of the L1-SINRs determined according to (2), (3), or the like described above is reported, a bit value of the L1-SINRs may be determined with reference to the second table.

Note that, even when a set of values of the L1-SINRs determined according to (2), (3), or the like described above is reported, if the set of the values of the L1-SINRs included in the CSI report decreases or increases monotonically in accordance with the order by dropping of at least one of the L1-RSRP and the L1-SINR, the bit value of the L1-SINRs may be determined with reference to the first table.

Note that the UE may determine whether or not the L1-SINR is included as a part of the L1-RSRPs in the CSI report, or the number of bits of the L1-SINR, based on at least on any one of whether or not at least one of the resources for L1-SINR measurement and the resources for L1-SINR report is configured, and configuration of an interference beam report (which may be an RRC parameter "interferenceBeamReporting"). For example, when the UE is configured with the CSI-RS resources for interference measurement or configured with the interference beam report being "enabled" (interferenceBeamReporting = "enabled") by using higher layer signaling, the UE may determine that the UE includes the L1-SINR of m bits as a part of the L1-RSRP in the CSI report.

### [Timing of CSI Report]

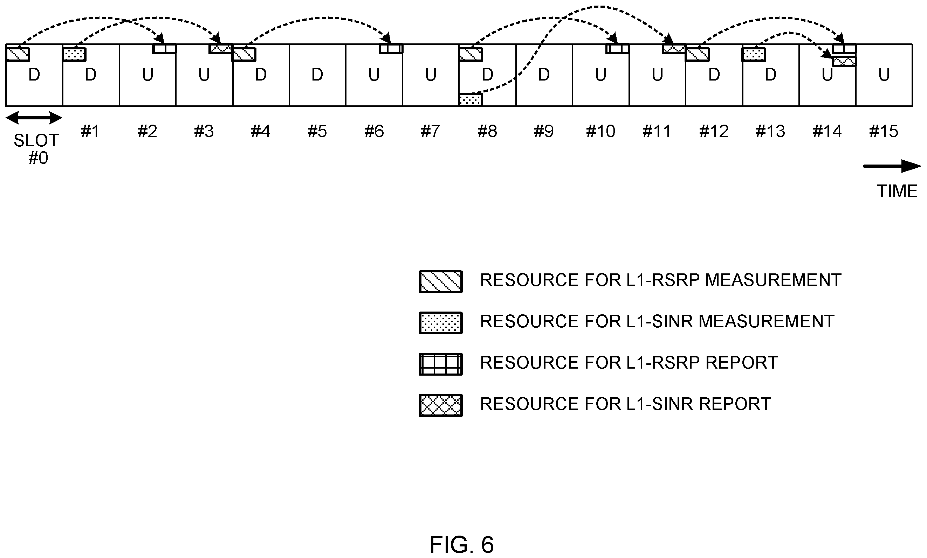

FIG. 6 is a diagram to show an example of the resources for CSI measurement and the resources for CSI report. In the present example, the UE is configured with the resources for L1-RSRP measurement of a four-slot periodicity starting from slot #0. Further, the UE is configured with resources for L1-RSRP report so as to be able to report the L1-RSRP two slots after the slot of the resources for L1-RSRP measurement.

These resource positions are merely an example, and details of the present disclosure are not limited to these.

The resources for L1-SINR measurement may be configured to be located at different timing (for example, a different slot, or a different symbol) from that of the resources for L1-RSRP measurement, or may be configured to be located at the same (or overlapping) timing. Further, the resources for L1-SINR report may be configured to be located at different timing from that of the resources for L1-RSRP report, or may be configured to be located at the same (or overlapping) timing.

For example, as shown in FIG. 6, the resources for L1-SINR measurement may be included in slot (#1), which is adjacent to slot (#0) including the resources for L1-RSRP measurement. The resources for L1-SINR measurement may be included in slot (#8), which is the same slot as the slot including the resources for L1-RSRP measurement.

Further, as shown in FIG. 6, the resources for L1-SINR report may be included in slot (#3), which is adjacent to slot (#2) including the resources for L1-RSRP report. The resources for L1-SINR report may be included in slot (#14), which is the same slot as the slot including the resources for L1-RSRP report.

When the resources for L1-SINR measurement and the resources for L1-RSRP measurement are included in the same slot, a corresponding L1-SINR and a corresponding L1-RSRP may be reported in the same slot, or may be reported in different slots.

When the resources for L1-SINR report and the resources for L1-RSRP report are included in the same slot, the resources for L1-SINR measurement and the resources for L1-RSRP measurement respectively corresponding to the L1-SINRs and the L1-RSRPs reported in these resources may be included in the same slot, or may be included in different slots.

The following provides detailed description of a case in which a CSI report including the L1-RSRP and another CSI report including the L1-SINR collide with each other (these resources are located at the same timing) as in the case of slot #14 of FIG. 6.

Note that, for example, "a certain resource and another resource are located at the same (or overlapping) timing" may mean that start symbols of these resources are the same, or may mean that these resources partially overlap at least in the time domain.

The UE may be configured with resources for report of a plurality of pieces of CSI (multi CSI). When the resources for L1-SINR report and the resources for L1-RSRP report are included in the same slot, the UE may transmit both of the L1-SINR and the L1-RSRP by using the resources for report of the plurality of pieces of CSI.

When the UE is not configured with the resources for report of a plurality of pieces of CSI, or the configured resources for report are incapable of reporting more pieces of CSI than one piece of CSI (lack capacity therefor), the UE may use any one of the resources for L1-RSRP report and for L1-SINR report to transmit any one of the L1-RSRP and the L1-SINR and drop the other.

Further, when the UE is not configured with the resources for report of a plurality of pieces of CSI, the configured resources for report are incapable of reporting more pieces of CSI than one piece of CSI (lack capacity therefor), and any one of the resources for L1-RSRP report and for L1-SINR report has capacity to report values of M L1-RSRPs (M beams), the UE may use resources for the capacity to transmit m L1-RSRPs and (M - m) L1-SINRs. Here, for example, M may be 4, and m may be 2.

Note that "resources for L1-SINR report and resources for L1-RSRP report are included in the same slot" may mean that these resources are included in the same slot of one component carrier (CC), or may mean that these resources are include in the same slot of a plurality of CCs.

When the resources for L1-SINR report, the resources for L1-RSRP report, report timings of other pieces of CSI, and the like overlap, and the configured resources for report of the plurality of pieces of CSI cannot include a plurality of overlapping reports (for example, all of the CSIs), the UE may drop at least one CSI report according to a given priority rule.

The given priority rule may be related to a priority value related to the CSI report. For example, the priority value may be defined using a function Pri_{iCSI} (y, k, c, s) .

When a value of Pri_{iCSI} (y, k, c, s) of a first CSI report is smaller than a value of Pri_{iCSI} (y, k, c, s) of a second CSI report, this may mean that the first CSI report has higher priority than the second CSI report.

For example, the value may be calculated according to Pri_{iCSI} (y, k, c, s) = 2 · N_{cells} · Mₛ · y + N_{cells} · Mₛ · k + Mₛ · c + s. Note that the priority value may be calculated based on another definition.

Here, y may be a value based on a type of the CSI report (A-CSI report, SP-CSI report, or P-CSI report) and a channel for transmitting the CSI report (PUSCH or PUCCH). For example, when PUSCH-based A-CSI report is used, y may be 0, when PUSCH-based SP-CSI report is used, y may be 1, when PUCCH-based SP-CSI report is used, y may be 2, and when PUCCH-based P-CSI report is used, y may be 3.

c may be a serving cell index. s may be a configuration ID (reportConfigID).

N_{cells} may be a value of a maximum number of serving cells configured (higher layer parameter maxNrofServingCells). Mₛ may be a value of a maximum number of CSI report configurations configured (higher layer parameter maxNrofCSI-ReportConfigurations).

k may be a value based on whether or not the CSI report includes the L1-RSRP, whether or not the CSI report includes the L1-SINR, and the like.

k may be configured (specified) using higher layer signaling, physical layer signaling, or a combination of these, or may be defined in a specification, so as to have at least one priority relationship of the following (A) to (C):
(A) CSI report including L1-RSRP > CSI report including L1-SINR > other CSI report (CSI report including neither L1-RSRP nor L1-SINR),
(B) CSI report including L1-SINR > CSI report including L1-RSRP > other CSI report (CSI report including neither L1-RSRP nor L1-SINR), and
(C) CSI report including L1-RSRP > other CSI report defined in Rel-15 NR (for example, CSI report including RI, PMI, or the like) > CSI report including L1-SINR > other CSI report defined in NR of Rel-16 or later versions.

For example, for k, values as follows may be configured or defined so as to satisfy at least one priority relationship of (A) to (C) above:
(A) k = 0, for CSI report including L1-RSRP,
   k = 1, for CSI report including L1-SINR,
   k = 2, for CSI report including neither L1-RSRP nor L1-SINR,
(B) k = 0 (or k = -1), for CSI report including L1-SINR,
   k = 1 (or k = 0), for CSI report including L1-RSRP,
   k = 2 (or k = 1), for CSI report including neither L1-RSRP nor L1-SINR, and
(C) k = 0, for CSI report including L1-RSRP,
   k = 1, for CSI report (of Rel-15 NR) including neither L1-RSRP nor L1-SINR,
   k = 2, for CSI report including L1-SINR.

Each value of k is merely an example, and is not limited to these. For example, k for the CSI report including L1-SINR of (B) above may be, for example, a negative value (k = -1).

According to (A) above, the report related to a beam (L1-RSRP, L1-SINR) can be preferentially reported over other CSI. Further, more important L1-RSRP regarding performance can be reported with the highest priority.

According to (B) above, the report related to a beam (L1-RSRP, L1-SINR) can be preferentially reported over other CSI. Further, the L1-SINR can be reported with the highest priority in order to recognize interference of a specific UE, for example.

According to (C) above, the CSI (L1-RSRP or the like) used in Rel-15 NR can be preferentially reported over CSI used in NR of Rel-16 or later versions. In regard to basic communication continuation, the CSI used in Rel-15 NR is more important.

The UE may be configured with the CSI report configuration information (CSI-ReportConfig) including information related to k. When k may be configured, the priority relationship of (A) to (C) above for each CSI report can be more flexibly controlled.

According to the third embodiment described in the above, the L1-RSRP and the L1-SINR can be appropriately reported with the CSI.

### <Additional Notes>

The base station may perform control of using a beam (for example, a transmit beam) corresponding to report that is reported from the UE, or may perform control of determining a beam to be used, based on a beam corresponding to the reported report.

Even when the UE performs beam selection based only on the L1-RSRP, the UE may also report the L1-SINR in addition to the L1-RSRP of a selected beam. With this configuration, criteria for beam determination of the base station can be provided.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

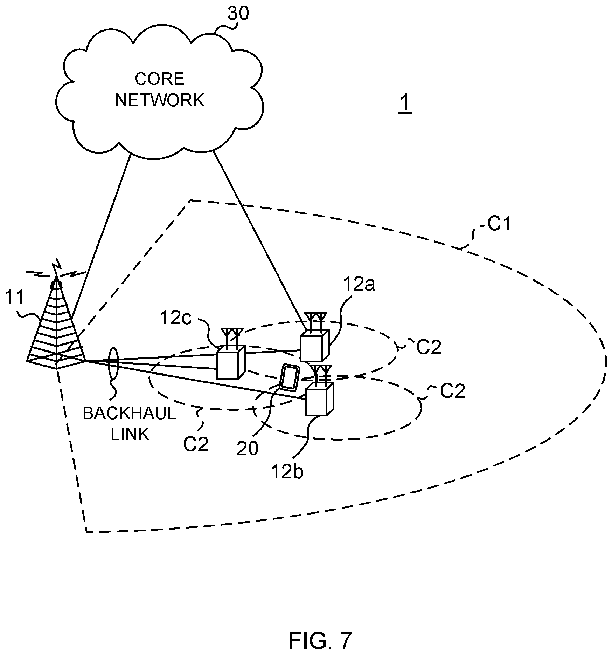

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

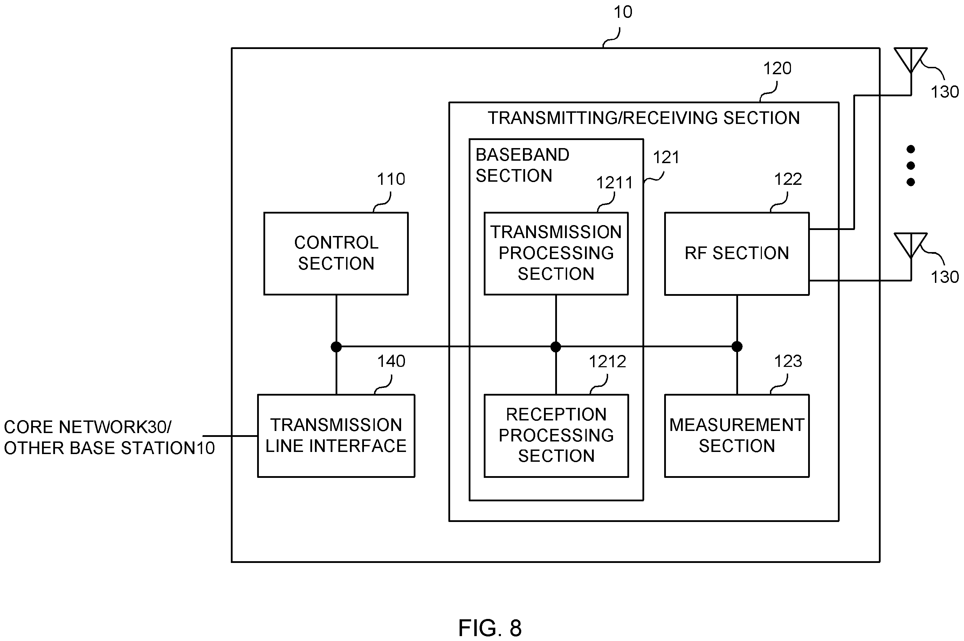

FIG. 8 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit configuration information (for example, at least one of a CSI-MeasConfig information element (IE), a CSI-ResourceConfig IE, and a CSI-ReportConfig IE of RRC and the like) related to measurement (or measurement report or report) for channel state information (CSI) to the user terminal 20. The transmitting/receiving section 103 may receive the CSI transmitted from the user terminal 20.

Note that the transmitting/receiving section 120 may transmit information (for example, "beamselectioncriteria" or "reportQuantity" of RRC) related to a beam selection indicator to the user terminal 20. The transmitting/receiving section 103 may receive the CSI transmitted from the user terminal 20.

The control section 110 may determine a beam to be used by the base station 10 or the user terminal 20, based on the CSI (beam report) from the user terminal 20.

Further, the transmitting/receiving section 120 may transmit first configuration information (for example, an RRC information element "CSI-ReportConfig") including a parameter (for example, an RRC parameter "reportQuantity") of report quantity of the channel state information indicating report of a signal to interference plus noise ratio (SINR) to the user terminal 20.

### (User Terminal)

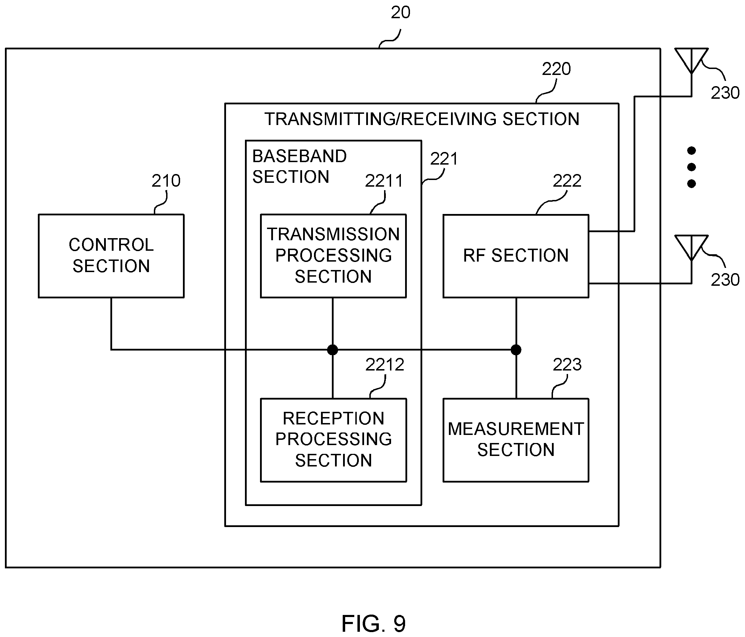

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be constituted as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive information (for example, "beamselectioncriteria" or "reportQuantity" of RRC) related to a beam selection indicator. The transmitting/receiving section 203 may transmit CSI including information (L1-RSRP, L1-SINR, or the like) related to interference based on the measurement to the base station 10.

The control section 210 may perform beam selection, based on an indicator specified by the information related to the beam selection indicator.

The control section 210 may use configuration information (for example, "reportQuantity" of RRC) of report quantity of channel state information as the information related to the beam selection indicator.

When a plurality of indicators are specified as the beam selection indicator, the control section 210 may select a first number of (for example, M) measurement results, based on one of the indicators (for example, L1-RSRP), and select a second number of (for example, "nrofReportedRS" of RRC) measurement results out of the first number of measurement results, based on another one of the indicators (for example, L1-RSRQ or L1-SINR).

The control section 210 may control report of the SINR (csi-SINR/ssb-SINR), based on configuration information (for example, "reportQuantity" of RRC) of report quantity of channel state information.

Further, the transmitting/receiving section 220 may receive first configuration information (for example, an RRC information element "CSI-ReportConfig") including a parameter (for example, an RRC parameter "reportQuantity") of report quantity of the channel state information indicating report of a signal to interference plus noise ratio (SINR).

In a case of receiving second configuration information (other "CSI-ReportConfig") including a parameter (for example, the RRC parameter "reportQuantity") of the report quantity of the channel state information indicating report of reference signal received power (RSRP), the control section 210 may perform control of reporting a given number of the SINRs in descending order of a value of a corresponding RSRP.

In a case of not receiving the second configuration information, the control section 210 may perform the control of reporting the given number of the SINRs in descending order of a value of the SINRs.

In a case of receiving the second configuration information, the control section 210 may generate information of the SINR, based on correspondence (for example, a table) in which a range of a difference value of the given number of the SINRs is limited to any one of 0 or less and 0 or greater.

When reports of a plurality of pieces of channel state information collide with each other, the control section 210 may perform control so as to preferentially transmit the report of a piece of channel state information including the RSRP and a piece of channel state information (for example, an RI, a CQI, a PMI, or the like) defined in release 15 New Radio (NR) over the report of a piece of channel state information including the SINR.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

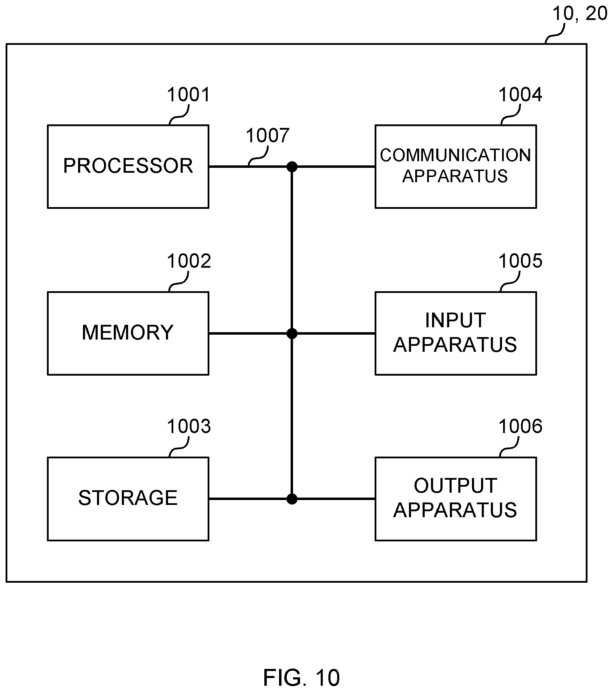

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used.

For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight), " "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives first configuration information including a parameter of report quantity of channel state information indicating report of a signal to interference plus noise ratio (SINR); and
a control section that performs, in a case of receiving second configuration information including a parameter of the report quantity of the channel state information indicating report of reference signal received power (RSRP), control of reporting a given number of the SINRs in descending order of a value of a corresponding RSRP.

2. The user terminal according to claim 1, wherein
in a case of not receiving the second configuration information, the control section performs control of reporting the given number of the SINRs in descending order of a value of the SINRs.

3. The user terminal according to claim 1 or 2, wherein
in a case of receiving the second configuration information, the control section generates information of the SINR, based on correspondence in which a range of a difference value of the given number of the SINRs is limited to any one of 0 or less and 0 or greater.

4. The user terminal according to any one of claims 1 to 3, wherein
when reports of a plurality of pieces of channel state information collide with each other, the control section performs control so as to preferentially transmit the report of channel state information including the RSRP and the report of channel state information defined in release 15 New Radio (NR) over the report of channel state information including the SINR.

5. A radio communication method for a user terminal, the radio communication method comprising:
receiving first configuration information including a parameter of report quantity of channel state information indicating report of a signal to interference plus noise ratio (SINR); and
performing, in a case of receiving second configuration information including a parameter of the report quantity of the channel state information indicating report of reference signal received power (RSRP), control of reporting a given number of the SINRs in descending order of a value of a corresponding RSRP.
